# EUROPÄISCHE PATENTSCHRIFT

(11) **EP 1 530 040 B1**
(45) Veröffentlichungstag und Bekanntmachung des Hinweises auf die Patenterteilung: **12.09.2012**
(21) Anmeldenummer: 04025485.6
(22) Anmeldetag: 27.10.2004
(51) Int. Cl.: G01N 25/72, D07B 1/14, B66B 7/06

(54) **Verfahren und Einrichtung zur Kontrolle von Tragmitteln**
Method and device for checking carrying means
Méthode et appareil pour contrôler des moyens de suspension

(30) Priorität: 04.11.2003 EP 03405790
(43) Veröffentlichungstag der Anmeldung: 11.05.2005
(73) Patentinhaber: Inventio AG, 6052 Hergiswil NW (CH)
(72) Erfinder: Lustenberger, Martin, 1752 Villars sur Glane (CH)

(56) Entgegenhaltungen:
- EP-A- 1 022 376
- GB-A- 2 169 702

## Beschreibung

Die Erfindung betrifft ein Verfahren zur Kontrolle eines Tragmittels und eine Einrichtung zur Kontrolle eines Tragmittels nach den Oberbegriffen der unabhängigen Ansprüche.

Bekannte Tragmittel sind Seile oder Riemen. Riemen bestehen aus mehreren Zugträgern, welche in eine gemeinsame Ummantelung eingebettet sind. Die Form des Riemens ist in der Regel flach. Das heisst die Zugträger sind nebeneinander, geringfügig beabstandet angeordnet und die Ummantelung umschliesst dieses Zugträgerband und füllt die durch die Abstände der Zugträger gegebenen Zwischenräume auf. Die Zugträger werden in bekannter Technologie aus Stahl- oder stahlähnlichen Werkstoffen meist als Litzen hergestellt und sind in der Regel elektrisch leitend.

EP 1022376 A offenbart ein Kunst fanerseit mit einem Temperaturfühlerelement, welches eine temperaturabhängige Luftfähigkeit aufweist.

Tragmittel der beschriebenen Form werden zunehmend auch im Aufzugsbau verwendet. So ist in der Veröffentlichung WO03/0439 ein entsprechender Riemen vorgestellt.

Eine besondere Anforderung ergibt sich, bei der Verwendung derartiger Tragmittel, an die Kontrolle der Tragmittel.
Die Tragmittel sind im Gebrauch verschiedenartigen Einflüssen ausgesetzt. Sie sind einem kontinuierlichen Verschleiss unterworfen. Sie sind im besonderen an Umlenkstellen des Tragmittels, beispielsweise wenn das Tragmittel über Rollen geführt wird, einer erhöhten Gefahr des Bruches einzelner Drähte ausgesetzt, oder die Zugträger können aufgrund ausserordentlicher Ereignisse, wie Montageeinfluss, Schläge, Korrosion, beschädigt werden. Diese Einflüsse reduzieren den tragenden Querschnitt und damit die ertragbare Tragkraft des Tragmittels und können im Extremfalle zu einem Versagen des Tragmittels führen.

In heute gebräuchlichen Installationen werden traditionellerweise Stahlseile ohne Ummantelung eingesetzt. Diese Stahlseile können visuell oder mittels magnetinduktiven Verfahren kontrolliert werden, wobei die Ablegereife gemäss DIN15020-2 bestimmt wird.

Aufgabe der vorliegenden Erfindung, ist es nun ein Verfahren und eine Einrichtung bereitzustellen, welche eine Kontrolle eines Tragmittels auf Beschädigungen von Zugträgern erlaubt ohne das Tragmittel dabei zu beschädigen.

Die vorliegende Erfindung löst diese Aufgaben durch die Merkmale der unabhängigen Ansprüche.

Erfindungsgemäss wird der physikalische Effekt benutzt, dass sich ein elektrischer Leiter beim Durchfliessen eines elektrischen Stromes erwärmt. Diese Erwärmung ist abhängig vom Leiterquerschnitt, bzw. vom Widerstand des Leiters und von der Wärmeableitung durch die Umgebung des Leiters. Weist nun ein Leiter, in einem Längenabschnitt, einen reduzierten Querschnitt auf, erhöht sich der Widerstand im entsprechenden Längenabschnitt, welches zwei Effekte bewirkt.
Zum Ersten muss die Spannung über dem Leiter erhöht werden um einen bestimmten Stromdurchfluss zu erreichen, oder der Stromdurchfluss verringert sich entsprechend der Widerstandserhöhung.
Zum Zweiten erwärmt sich der Leiter im Längenabschnitt mit der Querschnittsreduktion stärker als im restlichen Bereich mit unverändertem Querschnitt.

Die zwei Effekte werden erfindungsgemäss benutzt um eine zuverlässige Beurteilung der Ablegreife eines Tragmittels vornehmen zu können.
Ein Zugträger des Tragmittels wird mindestens zeitweise von einem elektrischen Messstrom durchflossen und die Temperatur des Tragmittels wird festgestellt.
Der erforderliche Messstrom wird von einer Stromsteuerung erzeugt. Der Messstrom erwärmt den beaufschlagten Teil. Bei einem unbeschädigten Zugträger ist die Erwärmung gleichmässig über die gesamte Länge des Tragmittels. Liegt eine Beschädigung im Zugträger vor, ist der Querschnitt im entsprechenden Längenabschnitt reduziert und die Temperatur ist in diesem Längenabschnitt erhöht. Mit einem Temperatur-Messgerät wird die Temperatur, vorzugsweise an der Oberfläche des Tragmittels, gemessen. Damit wird eine Temperaturerhöhung festgestellt, und anhand der Erhöhung die Stärke der Beschädigung beurteilt, bzw. die Ablegreife ermittelt.

Bevorzugte Weiterbildungen des erfindungsgemässen Verfahrens bzw. der entsprechenden Einrichtung sind in den abhängigen Ansprüchen definiert.

Die Einrichtung oder das Verfahren ermöglicht eine Beurteilung der Beschädigungsintensität sowie eine Bestimmung des Ortes der Beschädigung. Im Weiteren kann die Einrichtung im Handel kostengünstig beschafft werden und das Verfahren ist in seiner Anwendung einfach.

Schwerpunktsgemäss ist diese Einrichtung für die Anwendung im Aufzugsbau optimiert.

Im Folgenden wird die Erfindung anhand von Beispielen erläutert.

Es zeigen
- Fig.1: Theoretisches Modell eines intakten Tragmittels im Längsschnitt,
- Fig. 2: Theoretisches Modell eines beschädigten Tragmittels im Längsschnitt,
- Fig. 3: Ein Beispiel der Anordnung einer Einrichtung zur Feststellung der Ablegreife eines Tragmittels in einer Aufzugsanlage,
- Fig. 4: Ein zweites Beispiel der Anordnung einer Einrichtung zur Feststellung der Ablegreife eines Tragmittels in einer Aufzugsanlage,
- Fig. 5: Ein weiteres Beispiel der Anordnung einer Einrichtung zur Feststellung der Ablegreife eines Tragmittels in einer Aufzugsanlage mit 1:1 Aufhängung,
- Fig. 6: Ein Beispiel einer Temperatur-Messgerätes zur Feststellung der Oberflächentemperatur eines Tragmittels, und
- Fig. 7: Ein weiteres Beispiel eines Temperatur-Messgerätes zur Feststellung der Oberflächentemperatur eines Tragmittels.

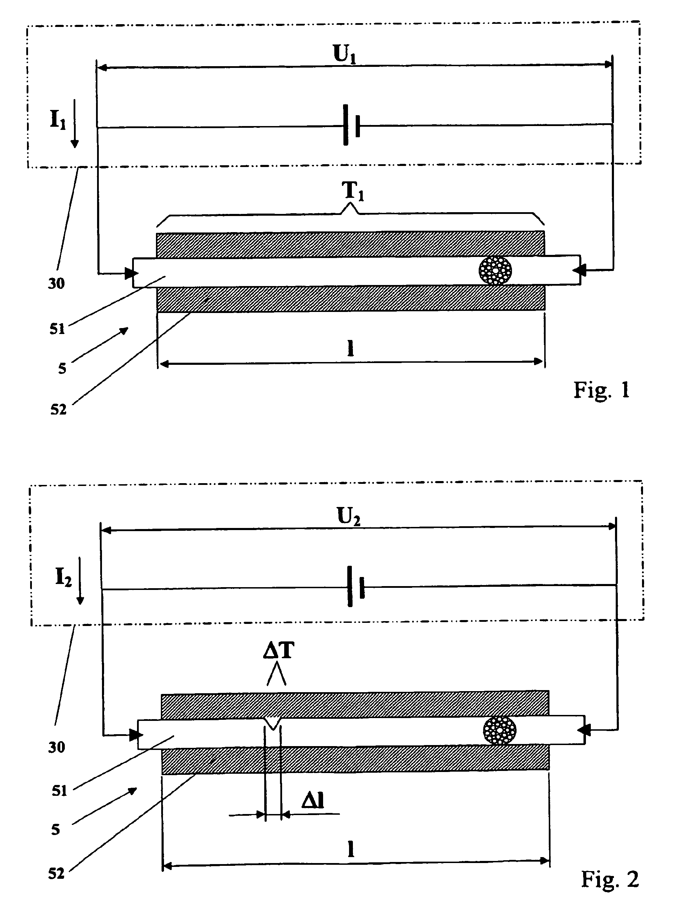

In Fig. 1 und Fig. 2 wird die Erfindung im physikalischen Zusammenhang dargestellt. Ein Tragmittel 5 besteht aus Zugträger 51. Der Zugträger 51 ist aus elektrisch leitendem Material hergestellt oder ist als gesamtes elektrisch leitend. Der Zugträger 51 ist von einer Ummantelung 52 umgeben bzw. in dieser Ummantelung 52 eingebettet. Die Ummantelung 52 besteht aus einem, im wesentlichen elektrisch isolierenden Material, wie beispielsweise Polyurethan. Sie isoliert die einzelnen Zugträger 51 im Wesentlichen voneinander. Das Tragmittel 5 weist eine dem Anwendungszweck entsprechende Länge 1 auf.

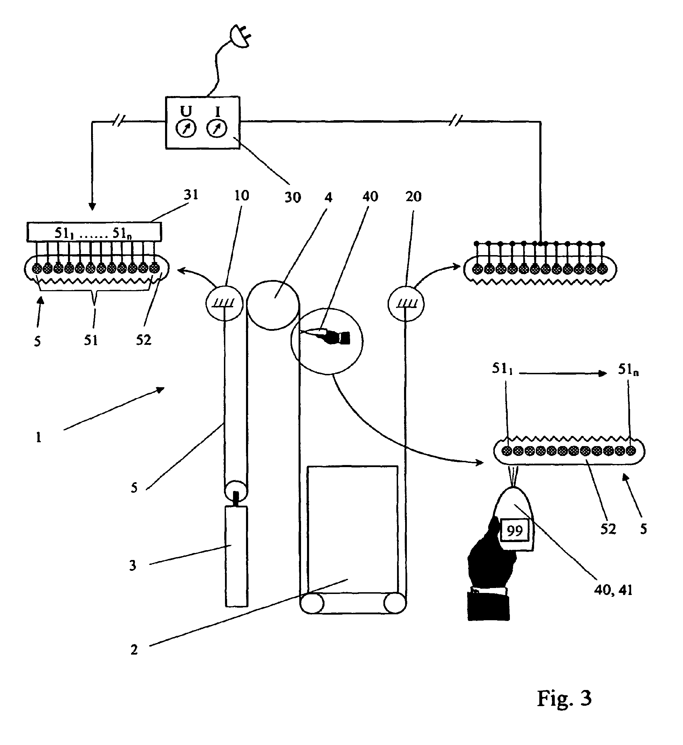

In dem in den Fig. 3 bis 7 dargestellten Beispielen besteht ein Tragmittel 5 aus zwölf Zugträgern 51, welche ihrerseits in der Form von Seillitzen aus einzelnen Stahldrähten verseilt sind. Im gezeigten Beispiel beträgt der Durchmesser des Zugträgers 51 ungefähr 1.5mm bis 2.0mm. Die Zugträger 51 sind voneinander beabstandet und als gesamtes mit einem Kunststoff ummantelt. Die Ummantelung 52 isoliert einzelne Zugträger 51 im Wesentlichen voneinander und bildet eine funktionsgerechte Oberfläche, welche beispielsweise spezifische Materialeigenschaften oder Oberflächen aufweist um eine Treibkraft auf das Tragmittel 5 zu übertragen. Im gezeigten Beispiel ist die Ummantelung 52 beidseitig glatt oder einseitig gerillt und auf der anderen Seite glatt. Die Gesamtbreite des Tragmittels 5 beträgt im gezeigten Beispiel ungefähr 23 bis 35 mm und die Stärke beträgt entsprechend 3 bis 7 mm.

Zur Durchführung der Kontrolle des Tragmittels 5 werden die Zugträger 51 mittels einer Stromsteuerung 30 von einem Messstrom durchflossen. Die einzelnen Zugträger 51 weisen einen Widerstand R von ungefähr 0.16 Ω/m auf. Gemäss Fig.1 ergibt sich somit bei einer von der Stromsteuerung 30 angelegten Spannung von U₁ = 0.8 V/m ein Messstrom von I₁ = 5A. Dieser Messstrom bewirkt unter Berücksichtigung der Wärmeabstrahlung und der beispielhaft gezeigten Tragmittelausführung eine Oberflächentemperatur T₁ von ungefähr 42°C bei intaktem Zugträger 51.
Die erwähnten Werte sind Beispiele. Konstruktionsbedingt sind andere Abmessungen und dementsprechend andere Werte möglich.
Ist nun ein Zugträger 51 wie in Fig.2 ersichtlich beschädigt, erhöht sich in dem betreffenden Längenabschnitt Δ1 des Zugträgers 51 der Durchgangswiderstand und entsprechend die Verlustleistung über diesem Längenabschnitt, was eine Erhöhung der Oberflächentemperatur bewirkt. Am charakteristischen Beispiel bewirkt beispielsweise eine Querschnittsreduktion von 8% einen Temperaturanstieg ΔT von 0.7°K an der Oberfläche der Beschädigung. Bei einer Querschnittsreduktion von 30% erhöht sich die Oberflächentemperatur um ungefähr 7°K.

Erfindungsgemäss ist dieser physikalische Effekt benutzt um das Tragmittel 5 auf Beschädigungen zu prüfen. Der Zugträger 51 des Tragmittels 5 wird mittels einer Stromsteuerung 30 von einem Messstrom durchflossen. Vorzugsweise mittels einem Temperatur-Messgerät 40 wird die Temperatur des Tragmittels 5, über die gesamte kritische Länge des Tragmittels gemessen und anhand einer festgestellten Temperaturveränderung zum vorgängigen Längenabschnitt und/oder zum Mittelwert der Temperaturmessung über die gesamte Länge des Tragmittels 5, wird eine Warnmeldung erzeugt und der Ort der Beschädigung kann im Bedarfsfalle genau bestimmt werden. Anhand der festgestellten Temperaturdifferenz kann eine Querschnittsreduktion im Zugträger 51 erkannt, die resultierende Tragkraftreduktion zuverlässig beurteilt, und dementsprechend die Ablegreife erkannt werden.

Der Vorteil dieser Erfindung ist darin zu sehen,
dass das Tragmittel 5 in bezug auf seinen Zustand genau beurteilt werden kann, dass das Tragmittel 5 bei der Kontrolle nicht beschädigt wird, dass die zu verwendenden Geräte im Handel einfach erhältlich sind, und dass die Anwendung einfach ist.

Vorzugsweise wird die Temperatur im Wesentlichen an der Oberfläche des Tragmittels festgestellt. Anstelle der Temperaturmessung kann auch eine Ummantelung 52 verwendet werden, bzw. in die Oberfläche der Ummantelung 52 kann eine entsprechende Schicht eingearbeitet sein, welche sich temperaturabhängig verfärbt. Dadurch lässt sich ohne Erfordernis eines Temperatur-Messgerätes 40 eine Beschädigung eines Zugträgers 51 besonders effizient, optisch erkennen.
Zu Testzwecken kann eine entsprechende Folie, welche sich temperaturabhängig verfärbt, auch nur temporär an der Oberfläche der Ummantelung 52 angebracht werden.
In einer Variante kann ein Temperaturfühler in die Ummantelung 52 des Tragmittels 5 eingelassen sein. Der Temperaturfühler misst die Temperatur in der Ummantelung des Tragmittels.

Bei einer in Fig. 3 gezeigten Anwendung ist die Einrichtung zur Kontrolle eines Tragmittels 5 am Beispiel einer Aufzugsanlage 1 mit umgehängter Kabine 2 und Gegengewicht 3 beispielhaft dargestellt. Die Zugträger 51 des Tragmittels 5 sind an einem ersten Tragmittelende 10, mittels Schaltelement 31 einzeln schaltbar an einen Pol der Stromsteuerung 30 angeschlossen. An einem zweiten Tragmittelende 20 sind die Zugträger 51 elektrisch leitend verbunden und gemeinsam am Gegenpol der Stromsteuerung 30 angeschlossen.
Mittels Einstellung der Speisespannung (U) und /oder einer Impulssteuerung wird ein mittlerer Messstrom (I) eingestellt, und ein erster Zugträger 51₁ wird von diesem Messstrom durchflossen, wodurch der Messstrom eine Erwärmung des ersten Zugträgers 51₁ und seiner umgebenden Ummantelung 52 bewirkt.

Die Temperatur des Tragmittels 5 wird, an einer Stelle die der Anordnung des gemäss Schalterstellung des Schaltelementes 31 geschalteten ersten Zugträgers 51₁ entspricht, mittels eines Temperatur-Messgeräts 40 gemessen. Das gezeigte Temperatur-Messgerät 40 misst die Temperatur des Tragmittels 5 an der Oberfläche der Ummantelung 52. Die Messung wird im dargestellten Beispiel in der Nähe der Antriebsmaschine 4 durchgeführt, wobei die Antriebsmaschine 4 die Aufzugsanlage, bzw. die Tragmittel mit kleiner Geschwindigkeit vorwärts bewegt. Wird nun eine Änderung der Oberflächentemperatur festgestellt, wird die Antriebsmaschine 4 gestoppt und die Stelle kann direkt beurteilt oder zur späteren Beobachtung gekennzeichnet werden. In der Regel wird die festgestellte Änderung gespeichert, was manuell, mittels elektronischem Speicher des Messgerätes oder eines am Messgerät angeschlossenen Datenschreibers erfolgen kann.

Nach erfolgter Kontrolle eines ersten Zugträgers 51₁ wird mittels Schaltelement 31 auf einen nächsten Zugträger 51₂ geschalten und die Kontrolle des nächsten Zugträgers 51₂ erfolgt entsprechend der Kontrolle des ersten Zugträgers 51₁. Die Kontrolle der folgenden Zugträger ...51ₙ erfolgt durch Weiterführung bzw. Wiederholung des Kontrollablaufes.

Eine allfällige Reduktion des tragenden Querschnittes der einzelnen Zugträger 51 und damit die Ablegreife des Tragmittels 5 kann nun aufgrund der festgestellten Temperaturabweichungen bewertet werden. Die Zuordnungstabelle, bzw. die Abhängigkeitsfunktion des Restquerschnittes zur Temperaturabweichung wird in der Regel anhand von Musterelementen ermittelt und festgelegt.

Vorteilhafterweise wird der Neuzustand des Tragmittels 5, bzw. der Zugträger 51 nach der erstmaligen Installation festgestellt und festgehalten. Die Erstmessung wird Analog dem vorgängig beschriebenen Ablauf durchgeführt. So wird beispielsweise die zur Erreichung des Messstromes erforderliche Spannung als Neu-Spannung dauerhaft gespeichert. Bei der Kontrolle des Tragmittels 5, bzw. der Zugträger 51 kann nun, zusätzlich zur Feststellung des tragenden Restquerschnittes, der Allgemeinzustand des Zugträgers 51 und damit des Tragmittels 5 folgendermassen ermittelt werden:
- Messstrom kann nicht erreicht werden bedeutet, dass der betreffende Zugträger 51 unterbrochen, d.h. zerstört ist,
- Ist die erforderliche Speisespannung höher als die Neu-Spannung bedeutet dies, dass der Querschnitt als gesamtes verringert ist, bzw. dass ein Verschleiss vorliegt,
- Ist die erforderliche Speisespannung tiefer als die Neu-Spannung bedeutet dies, dass ein Nebenschluss vorliegt. Das heisst, dass der Zugträger 51 beispielsweise in Berührung zu einem benachbarten Zugträger steht. In diesem Falle ist bei der Messung der Oberflächentemperatur an der Stelle des Nebenschlusses eine dauerhafte Reduktion der Temperatur an der Oberfläche des Tragmittels feststellbar.

Die aufgezeigten Bewertungsmöglichkeiten stellen kostengünstige und einfache Möglichkeiten dar, eine umfassende Kontrolle und Bewertung von Tragmitteln vorzunehmen. Das Tragmittel wird durch die Kontrolle nicht beschädigt, was einen weiteren Gebrauch ermöglicht.

Im gezeigten Beispiel gemäss Fig. 3 ist zur Einstellung des Messstromes an der Stromsteuerung 30 ein manuell einstellbarer Transformator verwendet. Zur Messung der Temperatur ist ebenfalls ein manuelles Temperatur-Messgerät 40, ein Oberflächenthermometer 41 verwendet. Die Bewertung der Messergebnisse wird dementsprechend ebenfalls manuell vorgenommen. Damit steht eine einfache und kostengünstige Methode zur Verfügung um die einzelnen Zugträger 51 des Tragmittels 5 zu kontrollieren und die Ablegreife des Tragmittels 5 zu bewerten. Die Geräte sind auch in wenig industrialisierten Gebieten verfügbar.

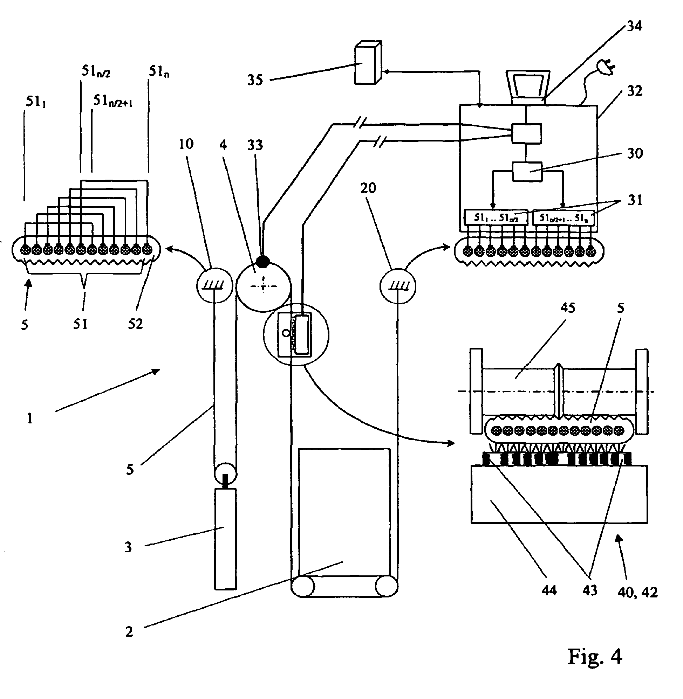

Fig. 4 zeigt eine automatisierte Gesamtlösung der Kontrolle eines Tragmittels 5 in einer Aufzugsanlage 1.

Die Zugträger 51 eines Tragmittels 5 sind an einem ersten Ende des Tragmittels 10 paarweise zusammengeschalten, so dass zwei beabstandete Zugträger 51₁, 51_{n/2+1} in Serie geschalten sind. An einem zweiten Ende des Tragmittels 20 werden die Zugträger 51 entsprechend der Zusammenschaltung des ersten Endes des Tragmittels 10 auf ein Schaltelement 31 und von diesem Schaltelement 31 zur Stromsteuerung 30 geführt. Das Schaltelement 31 und die Stromsteuerung 30 ist in diesem Beispiel in eine Kontrolleinheit 32 integriert oder wird zumindest von der Kontrolleinheit 32 gesteuert.

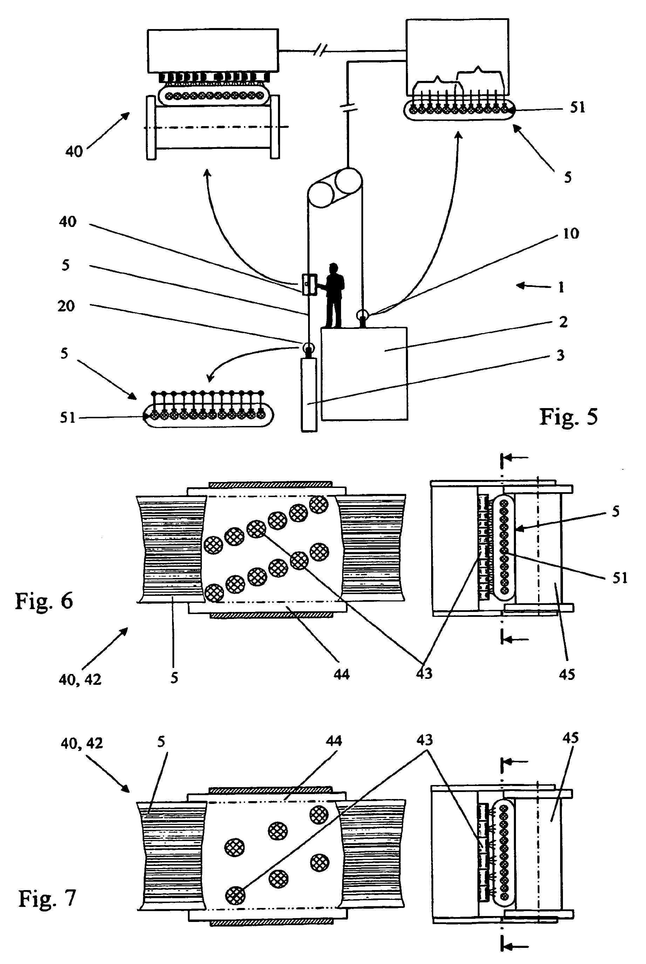

Ein Temperatur-Messgerät 40 ist in diesem Beispiel als Oberflächentemperatur-Erfassungseinheit 42 ausgeführt und besteht wie in Fig. 6 gezeigt aus einer Anordnung mehrerer Temperatursensoren 43 welche in einem Gehäuse 44 derart angeordnet sind, dass zu jedem Zugträger 51 ein Temperatursensor 43 zugeordnet ist. Eine Führungsrolle 45 positioniert das Tragmittel 5, damit die Ausrichtung der Zugträger 51 zu den Temperatursensoren 43 gewährleistet ist. Die Oberflächentemperatur-Erfassungseinheit 42 wird derart befestigt, dass bei einer Fahrt des Aufzuges über seinen gesamten Bewegungsbereich, die meistbelasteten Stellen des Tragmittels 5 an der Oberflächentemperatur-Erfassungseinheit 42 vorbeigeführt und damit die Oberflächentemperaturen gemessen werden können. Die Oberflächentemperatur-Erfassungseinheit 42 sendet die Messergebnisse an die Kontrolleinheit 32.
Ein Positionsgeber 33, wie in Fig. 4 gezeigt, übermittelt die jeweilige Position der Kabine 2 bzw. des Gegengewichtes 3 direkt oder mittels einer Anlage-, bzw. Aufzugssteuerung 35 an die Kontrolleinheit 32.
Die Kontrolleinheit 32 umfasst im besonderen, oder steuert zumindest, das Schaltelement 31, die Stromsteuerung 30 und Geräte zur Messung des Messstromes, zur Speicherung der Messdaten, sowie eine Auswerteeinheit 34 zur Auswertung der Messresultate. Im Bedarfsfalle ist eine Kommunikationsschnittstelle zur Anlagesteuerung 35 vorhanden, welche Anlagespezifische Kenndaten übermitteln kann. Im Weiteren enthält sie die zum Betrieb der Kontrolleinheit erforderlichen Netzteile sowie Ein- und Ausgabegeräte.

Die Kontrolleinheit 32 schaltet in einem ersten Schritt das Schaltelement 31 auf ein erstes Zugträgerpaar 51₁, 51_{n/2+1} und stellt die erforderliche Speisespannung fest und vergleicht diese Speisespannung mit der im Rahmen der Neuinstallation festgestellten erforderlichen Speisespannung. Die Kontrolleinheit 32 initialisiert nun eine erste Messfahrt, beispielsweise mittels Signal an die Anlagesteuerung 35 oder mittels Freigabe Signal an das Bedienpersonal. Die Kontrolleinheit 32 zeichnet während der Messfahrt die Messergebnisse der Oberflächentemperatur-Erfassungseinheit 42, bzw. die Oberflächentemperatur der geschalteten Zugträger 51₁, 51_{n/2+1}, die genaue jeweilige Position der Kabine 1 sowie allenfalls den Verlauf des Messstromes bzw. der Speisespannung auf.
Nach Ablauf der ersten Messfahrt schaltet die Kontrolleinheit 32 mittels des Schaltelementes 31 auf ein nächstes Zugträgerpaar 51₂, 51_{n/2+2} und wiederholt den Messablauf entsprechend dem Messablauf des ersten Zugträgerpaares 51₁, 51_{n/z+1}. Die Messungen werden weitergeführt bis alle Zugträger 51 kontrolliert sind.
Abschliessend erstellt die Kontrolleinheit 32 ein Abschlussprotokoll, welches Abweichungen vom Sollzustand aufzeigt, wobei der Sollzustand dem Neuzustand inkl. der erwarteten altersabhängigen oder toleranzbedingten Abweichungen entspricht.

In diesem Beispiel erfolgt die Einstellung des Messstromes an der Stromsteuerung automatisch, die Schaltung zu den Zugträgern erfolgt automatisch und die Messung der Temperatur wie auch die Auswertung erfolgt automatisch. Die dargestellte Variante stellt eine automatische Gesamtlösung dar, mittels der eine Kontrolle der Tragmittel 5 einer Aufzugsanlage 1 mit minimalem Personalaufwand durchgeführt werden kann. Das Resultat ist reproduzierbar gespeichert.
Die Anordnung kann temporär als Wartungstool eingesetzt werden, oder sie kann als Bestandteil der Aufzugsanlage dauernd belassen werden, wodurch Messungen in kurzen Intervallen ermöglicht werden. Dies ist besonders vorteilhaft bei sehr stark belasteten Anlagen oder Anlagen mit beispielsweise schwer kontrollierbaren Einflüssen, wie sie beispielsweise in chemisch aggressiver Umgebung vorhanden sein können.

Die in Fig. 3 und Fig. 4 gezeigten Lösungen sind kombinierbar. So kann beispielsweise das in Fig. 4 dargestellte Positionserkennung der Kabine weggelassen werden. Daraus ergeben sich teilweise manuelle Kontrollabläufe.

Die Zugträger 51 sind abhängig von den Anlagedaten und dem gewählten Kontrollvorgehen schaltbar.
In Fig. 3 ist jeder Zugträger 51 einzeln geschalten und wird einzeln kontrolliert. Die Zugträger 51 sind am beim Tragmittelende 20 elektrisch miteinander verbunden. Diese Lösung benötigt wenige Geräte und ist einfach ausführbar.
In Fig. 4 sind jeweils zwei Zugträger 51 in Serie zusammengeschalten, indem die entsprechenden Zugträger 51 am zweiten Tragmittelende 20 elektrisch verbunden sind. Diese Lösung erlaubt die Kontrolle von zwei Zugträgern gleichzeitig und benötigt dementsprechend wenig Zeitaufwand zur Durchführung der Kontrolle.
In Fig. 5 sind ebenfalls jeweils zwei Zugträger 51 in Serie zusammengeschalten. Alle Zugträger 51 sind am zweiten Tragmittelende 20 elektrisch verbunden und die Auswahl der zusammengeschalteten Zugträger 51 erfolgt durch die entsprechende Schalterstellung am ersten Tragmittelende 10. Auch diese Lösung erlaubt die Kontrolle von zwei Zugträgern 51 gleichzeitig und benötigt dementsprechend wenig Zeitaufwand zur Durchführung der Kontrolle. Im Unterschied zur Lösung gemäss Fig. 4 ergeben sich anders zu wertende Resultate bei allfälligen Nebenschlüssen von Zugträgern 51.

Die dargestellten Lösungen stellen Varianten dar, welche vom Fachmann erweitert werden können, so dass beispielsweise mehrere Zugträger des Tragmittels jeweils einzeln, zeitlich nacheinander, kontrolliert werden, oder dass mehrere Zugträger des Tragmittels zu Gruppen zusammengeschalten sind und gruppenweise, zeitlich nacheinander, kontrolliert werden, oder dass beispielsweise alle Zugträger des Tragmittels zu einer Gruppe zusammengeschalten sind und miteinander kontrolliert werden.
Anstelle eines Schaltelementes 31 können die Zugträger direkt ohne Schaltelement angeschlossen werden.

In Fig. 5 ist eine Aufzugsanlage 1 mit direkt aufgehängter Kabine 2, bzw. Gegengewicht 3 gezeigt. Beispielhaft ist das Temperatur-Messgerät 40 auf der Kabine platziert. Im Einzelfalle können mehrere verschiedene Platzierungen des Temperatur-Messgerätes 40 sinnvoll sein, um das Tragmittel 5 über seine gesamte Länge kontrollieren zu können, oder der Fachmann ordnet das Temperatur-Messgerät bewusst an der oder den Stellen an, an denen das Tragmittel seine grösste Belastung erfährt. Die Stellen der grössten Belastung sind beispielsweise die Längenabschnitte des Tragmittels die unter Berücksichtigung des Gebrauchs der Anlage die meisten Biegewechsel erfahren.

Fig.7 zeigt eine alternative Anordnung der Temperatursensoren 43 auf der Oberflächentemperatur-Erfassungseinheit 42. Hierbei werden die Temperatursensoren 43 derart platziert, dass ein Temperatursensor 43 zwei oder mehrere Zugträger 51 erfassen kann. Damit wird eine Kosteneinsparung bewirkt, da die Anzahl Temperatursensoren 43 deutlich reduziert werden kann.

Der Fachmann erkennt weitere vorteilhafte Kombinationen. So verwendet er beispielsweise eine Wärmebildkamera als Temperatur-Messgerät, er ermittelt die für ihn vorteilhafteste Zusammenschaltung der Zugträger, einzeln oder in Gruppen, er bestimmt den Grad der Automatisierung des Kontrollablaufes oder er ermittelt die optimale Anordnung des Temperatur-Messgerätes.
Bei der Anwendung auf stehenden Tragmitteln wird das Temperaturmessgerät in geeigneter Weise dem Tragmittelstrang entlang geführt.

## Patentansprüche

1. Verfahren zur Kontrolle eines Tragmittels (5), wobei das Tragmittel (5) aus einem Zugträger (51) besteht, welcher mindestens teilweise aus elektrisch leitendem Material besteht und der Zugträger (51) mit einer Ummantelung (52) versehen ist, wobei
der Zugträger (51) des Tragmittels (5) mindestens zeitweise von einem elektrischen Messstrom durchflossen wird und eine Temperatur des Tragmittels (5) gemessen wird, wobei mittels einer gemessenen Temperaturveränderung ΔT Beschädigungen am Tragmittel (5) örtlich zugeordnet werden.

2. Verfahren nach Anspruch 1, wobei die Temperatur im Wesentlichen an der Oberfläche der Ummantelung des Tragmittels gemessen wird

3. Verfahren nach Anspruch 1 oder 2, wobei die Temperatur des Tragmittels (5) pro Längenabschnitt des Tragmittels (5) festgestellt wird und jedem Längenabschnitt eine entsprechende Temperaturveränderung ΔT zum vorgängigen Längenabschnitt, und / oder zum Mittelwert der Temperaturmessungen über die gesamte Tragmittellänge, zugeordnet wird und eine Warnmeldung erfolgt, wenn die Temperaturveränderung ΔT einen vordefinierten Wert unter- oder überschreitet.

4. Verfahren nach einem der vorangehenden Ansprüche wobei mittels der Unterschiedstemperatur die Tragkraftreduktion des Zugträgers (51) festgestellt, und damit die Ablegereife des Tragmittels (5) festgestellt wird.

5. Verfahren nach einem der vorangehenden Ansprüche, wobei bei der Inbetriebnahme des Tragmittels (5) die erforderliche Neu-Spannung zur Erreichung des Messstromes des einzelnen Zugträgers (51) oder Zugträgergruppe festgestellt wird und bei Durchführung der Kontrolle die erforderliche Speisespannung im Verhältnis zur Neu-Spannung beurteilt bzw. anhand dieses Verhältnisses ein Allgemeinzustand des Tragmittels (5) bestimmt wird.

6. Einrichtung mit einem Tragmittel (5), einer Stromsteuerung (30) und einem Temperatur-Messgerät (40) zur Kontrolle eines Tragmittels (5), wobei das Tragmittel (5) aus einem Zugträger (51) besteht, welches mindestens teilweise aus elektrisch leitendem Material besteht und der Zugträger (51) mit einer Ummantelung (52) versehen ist, wobei
die Stromsteuerung (30) zur Erzeugung eines elektrischen Stromflusses im Zugträger (51) vorhanden ist und
wobei das Temperatur-Messgerät (40) die Temperatur des Tragmittels (5) vorzugsweise oberflächlich misst, wobei mittels einer gemessenen Temperaturveränderung ΔT Beschädigungen am Tragmittel (5) örtlich zuordenbar sind.

7. Einrichtung nach Anspruch 6, wobei mittels der Stromsteuerung (30) der Stromwert und / oder die Stromimpulsdauer einstellbar ist und, dass die Einstellung der Stromsteuerung (30) manuell oder automatisch ist.

8. Einrichtung nach einem der Ansprüche 6 oder 7, wobei ein Schaltelement (31) zur sequentieller Auswahl des zu prüfenden Zugträgers (51) oder der zu prüfenden Zugträgergruppe vorgesehen ist, oder dass der Zugträger (51) oder die Zugträgergruppe einzeln angeschlossen ist.

9. Einrichtung nach einem der Ansprüche 6 bis 8, wobei das Temperatur-Messgerät (40) ein Oberflachenthermometer (41), eine Oberflächentemperatür-Erfassungseinheit (42) oder eine Wärmebildkamera ist.

10. Einrichtung nach einem der Ansprüche 6 bis 9, wobei eine Kontrolleinheit (32) wahlweise ein oder mehrere der folgenden Elemente enthält:
- Stromsteuerung (30) zur Einstellung des erforderlichen Messstromes inklusive der erforderlichen Netzteile,
- Schaltelement (31) zur Schaltung der Zugträger (51),
- Temperatur-Messgerät (40) oder einen Anschluss zum Anschliessen des Temperatur-Messgerätes (40),
- Anschluss zum Anschliessen eines Positionsgebers (33),
- Anschluss an eine Anlagensteuerung (35),
- Auswerteinheit (34) mit den erforderlichen Ein- und Ausgabeeinheiten und den notwendigen Speichermedien oder eine entsprechende Anschlussstelle zum Anschliessen einer externen Auswerteeinheit.

## Claims

1. Method of checking a support means (5), wherein the support means (5) consists of a tensile support (51), which consists at least partly of electrically conductive material, and the tensile support (51) is provided with a sheathing (52), wherein the tensile support (51) of the support means (5) is flowed through at least periodically by an electric measuring current and a temperature of the support means (5) is measured, wherein damage to the support means (5) is locally assigned by means of the measured temperature change ΔT.

2. Method according to claim 1, wherein the temperature is measured substantially at the surface of the sheathing of the support means.

3. Method according to claim 1 or 2, wherein the temperature of the support means (5) is established per length section of the support means (5) and each length section is associated with a corresponding temperature change ΔT with respect to the preceding length section and/or to the mean value of the temperature measurements over the entire support means length and a warning report takes place when the temperature change AT falls below or exceeds a predefined value.

4. Method according to one of the preceding claims, wherein the reduction in load-bearing force of the tensile support (51) is established by means of the difference temperature and thus the readiness of the support means (5) for discard is established.

5. Method according to one of the preceding claims, wherein in the case of placing the support means (5) in operation the requisite new voltage for attainment of the measuring current of the individual tensile support (51) or tensile support group is established and in the case of carrying out the check the requisite supply voltage in relation to the new voltage is assessed or on the basis of this relationship a general state of the support means (5) is determined.

6. Equipment with a support means (5), a current control (30) and a temperature measuring apparatus (40), for checking a support means (5), wherein the support means (5) consists of a tensile support (51), which consists at least partly of an electrically conductive material, and the tensile support (51) is provided with a sheathing (52), wherein the current control (30) for producing an electric current flow in a tensile support (51) is present and wherein the temperature measuring apparatus (40) measures the temperature of the support means (5) preferably in terms of surface, wherein damage to the support means (5) is locally assignable by means of the measured temperature change ΔT.

7. Equipment according to claim 6, wherein the value of the current and/or the pulse duration of the current is settable by means of the current control (30) and that the setting of the current control (30) is manual or automatic.

8. Equipment according to one of claims 6 and 7, wherein a switch element (31) for sequential selection of the tensile support (51) to be checked or of the tensile support group to be checked is provided or that the tensile support (51) or the tensile support group is individually connected.

9. Equipment according to one of claims 6 to 8, wherein the temperature measuring apparatus (40) is a surface thermometer (41), a surface temperature detecting unit (42) or a thermal imaging camera.

10. Equipment according to one of claims 6 to 9, wherein a checking unit (32) selectably contains one or more of the following elements:
- current control (30) for setting the requisite measuring current inclusive of the requisite mains supply units,
- switching element (31) for switching the tensile support (51),
- temperature measuring apparatus (40) or a connection for connecting the temperature measuring apparatus (40),
- connection for connecting a position transmitter (33),
- connection to an installation control (35),
- evaluating unit (34) with the required input and output units and the necessary storage media or a corresponding connecting point for connection of an external evaluating unit.

## Revendications

1. Procédé pour contrôler un moyen de suspension (5), étant précisé que le moyen de suspension (5) se compose d'un élément de traction (51) qui se compose au moins en partie d'un matériau conducteur d'électricité, et que l'élément de traction (51) est pourvu d'une gaine (52),
que l'élément de traction (51) du moyen de suspension (5) est traversé au moins temporairement par un courant de mesure électrique et qu'une température du moyen de suspension (5) est mesurée, et que des dégradations du moyen de suspension (5) sont attribuées localement à l'aide d'une variation de température ΔT mesurée.

2. Procédé selon la revendication 1, étant précisé que la température est mesurée globalement à la surface de la gaine du moyen de suspension.

3. Procédé selon la revendication 1 ou 2, étant précisé que la température du moyen de suspension (5) est constatée pour chaque tronçon du moyen de suspension (5), et à chaque tronçon est attribuée une variation de température correspondante ΔT par rapport au tronçon précédent et/ou à la valeur moyenne des mesures de température sur toute la longueur du moyen de suspension, et il y a un message avertissement si la variation de température ΔT devient inférieure ou supérieure à une valeur prédéfinie.

4. Procédé selon l'une des revendications précédentes, étant précisé que l'on constate à l'aide de la différence de température la réduction de la force porteuse de l'élément de traction (51) et on constate ainsi qu'il est temps de déposer le moyen de suspension (5).

5. Procédé selon l'une des revendications précédentes, étant précisé que lors de la mise en marche du moyen de suspension (5), la nouvelle tension nécessaire pour atteindre le courant de mesure de l'élément de traction individuel (51) ou du groupe d'éléments de traction est constatée, et lors de l'exécution du contrôle, la tension d'alimentation nécessaire est jugée par rapport à la nouvelle tension ou un état général du moyen de suspension (5) est défini à l'aide de ce rapport.

6. Dispositif avec un moyen de suspension (5), une commande de courant (30) et un thermomètre (40) pour contrôler un moyen de suspension (5), étant précisé que le moyen de suspension (5) se compose d'un élément de traction (51) qui se compose au moins en partie d'un matériau conducteur d'électricité, que l'élément de traction (51) est pourvu d'une gaine (52),
que la commande de courant (30) est destinée à produire un courant électrique dans un élément de traction (51),
que le thermomètre (40) mesure la température de l'élément de traction (5) de préférence en surface, et que des dégradations du moyen de suspension (5) peuvent être attribuées localement à l'aide de la variation de température ΔT.

7. Dispositif selon la revendication 6, étant précisé qu'à l'aide de la commande de courant (30), la valeur de courant et/ou la durée d'impulsion de courant sont réglables, et que le réglage de la commande de courant (30) est manuel ou automatique.

8. Dispositif selon l'une des revendications 6 ou 7, étant précisé qu'il est prévu un élément de commutation (31) pour la sélection séquentielle de l'élément de traction à tester (51) ou du groupe d'éléments de traction à tester, ou que l'élément de traction (51) ou le groupe d'éléments de traction sont raccordés individuellement.

9. Dispositif selon l'une des revendications 6 à 8, étant précisé que le thermomètre (40) est constitué par un thermomètre de surface (41), une unité de relevé de température de surface (42) ou une caméra thermique.

10. Dispositif selon l'une des revendications 6 à 9, étant précisé qu'une unité de contrôle (32) contient sélectivement l'un au moins des éléments suivants :
- commande de courant (30) pour régler le courant de mesure nécessaire, y compris les blocs d'alimentation nécessaires,
- élément de commutation (31) pour commuter les éléments de traction (51),
- thermomètre (40) ou un raccordement pour raccorder le thermomètre (40),
- raccordement pour raccorder un détecteur de position (33),
- raccordement à une commande d'installation (35),
- unité d'analyse (34) avec les unités d'entrée et de sortie nécessaires et les supports de stockage nécessaires, ou un point de raccordement correspondant pour le raccordement d'une unité d'analyse externe.
